Europäisches Patentamt

European Patent Office

Office européen des brevets

(11) Publication number: **0 044 668**
**B1**

(12) **EUROPEAN PATENT SPECIFICATION**

(45) Date of publication of patent specification: **16.05.84**

(21) Application number: **81303127.5**

(22) Date of filing: **09.07.81**

(51) Int. Cl.³: **F 16 L 9/12, B 21 D 49/00**

(54) Improvements in and relating to conduits.

(30) Priority: **17.07.80 GB 8023358**
**14.08.80 GB 8026484**
**20.11.80 GB 8037224**

(43) Date of publication of application:
**27.01.82 Bulletin 82/04**

(45) Publication of the grant of the patent:
**16.05.84 Bulletin 84/20**

(84) Designated Contracting States:
**AT BE CH DE FR GB IT LI LU NL SE**

(56) References cited:
**EP-A-0 030 091**
**FR-A-2 367 975**
**GB-A-1 060 987**
**GB-A-1 171 122**
**GB-A-1 175 005**
**GB-A-2 038 444**
**US-A-1 969 947**
**US-A-3 562 899**

(73) Proprietor: **Engel, Thomas Paul**
**Haldenhof**
**CH-6287 Aesch/Lu (CH)**

(72) Inventor: **Engel, Thomas Paul**
**Haldenhof**
**CH-6287 Aesch/Lu (CH)**

(74) Representative: **Evans, David Charles et al**
**F.J. CLEVELAND & COMPANY 40-43, Chancery Lane**
**London, WC2A 1JQ (GB)**

## Description

The present invention relates to conduits of a plastics material and has particular reference to such conduits used in heating and water system.

A particular aspect of the application is the use of cross-linked polyolefinic materials in such water systems. The typical of these materials are the cross-linked polyolefinic materials described and claimed in British Patent No. 1,158,011. These materials may be manufactured conveniently in tube or in conduit form as described in the completed specification of that patent. While these materials have been found to be eminently successful in the heating and like systems, it has been noticed that the oxygen diffusion rate through the material tends to be rather high, and with an increase in temperature the oxygen diffusion rate through the cross-linked or other plastic tubing increase substantially.

The result is that after a period of time, a high concentration of oxygen ions is to be found in the water or fluid circulating within the system. This in turn results in an increased rate of corrosion of metal components within the system itself. This can be prevented in a number of ways:—

1. By coating the exposed metal surfaces in contact with the circulating fluid with a layer of material which is not subject to corrosion.

2. By adding an inhibitor to the central heating system or by a combination of these steps.

The practise of adding an inhibitor to reduce the oxygen ion concentration within the fluid itself thereby reducing the rate of oxygen ion induced corrosion is well known and widely practised. Typical inhibitors are based on hydrazine. Unfortunately such systems are difficult to control because the water has to be renewed within the system from time to time for maintenance and for other purposes and when removal takes place it cannot be ascertained with certainty that a further supply of inhibitor has been added.

With regard to coating the exposed metal surfaces, the objection to this proposal is that the coating of such surfaces is expensive and significantly increases the overall cost. While the coating may inhibit corrosion for a period, experience tends to show that in service a proportion of such coatings fail with a result that corrosion ultimately recommences. The corrosion within the system is such that a considerable amount of oxide is formed which is caused to circulate with the fluid ultimately producing clogging and malfunction within the system.

It has been appreciated, therefore, that there is a need to reduce the oxygen diffusion through the walls of plastic conduit presently employed in water systems and in particular in heating systems to the greatest possible extent.

With cross-linked polyolefinic materials attempts have been made by incorporating additives and by paying careful attention to the uniformity of the material and the uniformity of cross-linking to reduce the oxygen ion diffusion through the wall as much as possible. While, however, the rate of permeation or diffusion of oxygen ions through the material can be retarded in this manner, it cannot be retarded sufficiently to prevent the deleterious effect of the presence and build up of oxygen ions in the circulating material, since ultimately the concentration of oxygen ions will increase to such a level that corrosion will once again recommence.

It has been proposed, hitherto, to retard and virtually eliminate oxygen difusion by providing a layer of metal foil totally about the tube and then bonding the foil to the tube surface.

Attempts at providing such tubes including a barrier layer include GB—A—1 171 122. This disclosure provides moisture impervious tubes comprising outer and inner plastics tubes including a continuous interlayer of a moisture impervious material, such as a plastics or metal foil, bonded to said outer and inner tubes.

Similarly, GB—A—2 038 444 provides a tube having an inner surface of a synthetic plastics material and an outer surface of a metallic foil, eg: aluminium. The outer foil is longitudinally, circumferentially, or helically wrapped about the tube, and is provided with a continuous adhesive layer to bond the foil to the plastics material.

This provides an excellent oxygen barrier provided and only provided the continuity of the foil is maintained throughout. This has been proposed and has been attempted on a number of occasions. The disadvantage, however, is that when used in a heating system differential expansion and contraction takes place between the foil layer on the one hand and the plastics material on the other with a result that with a passage of time, the foil layer cracks and splits thereby allowing atmospheric oxygen direct access to the surface of the plastics tube so that oxygen diffusion once again takes place.

According to the present invention there is provided a conduit comprising a tube of plastics material and an oxygen diffusion resistant barrier layer surrounding the tube, characterised in that the barrier layer is bonded to the plastics material at longitudinally spaced intervals along the tube. The invention also includes a method of manufacturing a conduit in accordance with the invention which method comprises advancing the tube of plastics material and a barrier layer therefor in juxtaposition while forming said barrier layer about said tube, sealing overlapping edges of said barrier layer one to another to enclose said tube and bonding said barrier layer to said tube at spaced intervals along the tube by the application of heat and pressure.

The invention further includes apparatus for conducting the method in accordance with the present invention which comprises delivery means for advancing a tube of plastics material and a barrier layer therefor in juxtaposition, forming means for forming said barrier layer about said tube, sealing means for sealing overlapping edges of said barrier layer one to another to enclose said tube and bonding means for circumferentially bonding said barrier layer to said tube at spaced intervals therealong by the application of heat and pressure.

The barrier layer is resistant to oxygen ion diffusion and may be a metal foil such, for example, as aluminium foil or copper foil. Each of the spaced bonds is preferably a circumferential bond, the arrangement being such that differential expansion and contraction between the plastics material of the tube and the barrier layer takes place between the bonds. The spacing between adjacent bonds along a tube length allows limited differential movement between the barrier layer on the one hand and the plastics material of the wall of the tube on the other, without significant stress taking place as it does when the whole of the internal surface of, for example, a foil layer is physically bonded to the external surface of a plastics tube.

Each circumferential bond is preferably in a plane transverse to the longitudinal axis of the tube and is still more preferably substantially perpendicular to the longitudinal axis of the tube. The circumferential bonds may, however, be disposed in planes that are not perpendicular to the tube without significantly deleterious effect. The longitudinal edges of the barrier layer may be wrapped about the tube and sealed and at the same time or subsequently the spaced bonding is effected so that a plurality of spaced annular cavities are defined by the internal surface of the foil and the external surface of the tube and of the bond itself. The spacing of the bonds is not critical provided continuity of the foil/tube is maintained. The spacing of the bonds is a function of the thickness of the tube itself. In a typical embodiment of a 20mm internal bore plastics tube the spacing of the bonds may be within the range of 20mm preferably within the range of 10 to 25mm. The bond itself may be formed in a number of different ways. The foil may be coated on its internal surface with a layer of polyethylene or polypropylene or with a layer of "hot melt" as manufactured by Ciba Greigy or the Henkel Chemical Company. The external surface of the foil may also be coated with polyester to protect the said external surface. The foil is then applied to the tube so that the longitudinal edges overlap and with the application of heat and pressure to the overlapped edge, the adhesive layers thereon effects a seal of one edge to another to form a longitudinal joint whereby the foil is disposed totally about the tube. Heat and pressure is then applied at circumferentially spaced intervals along the tube in order to provide the circumferential bond between the barrier layer and the tube itself. A foil layer of aluminium of greater than 15 microns and preferably 20 microns is preferable and where reinforcement of the tube is required a layer of up to 0.1mm may be employed.

As an alternative to a continuous layer of adhesivable bonding agent a pattern of bonding material may be printed on the internal surface of the barrier layer so that the bonding only occurs in accordance with that pattern.

Bonding materials may also include polyethylene or polypropylene together in an effective amount of up to 10%, typically 6%, by weight of an ethylenically unsaturated carboxylic acid for example, acrylic or methacrylic acid. A useful side effect of such an arrangement is that the use of such an adhesive will enable an overlap to be effected between the foil so that a foil-to-foil joint with an outer layer of foil overlaying an inner layer of foil may be employed without effecting a bond between the inner layer of foil and the tube wall itself.

In a further aspect of the invention the foil layer may be applied loosely so that substantial air pockets are formed between the foil layer on the one hand and the surface of the tube on the other to define a cavity between adjacent circumferential bonds. This effect may be achieved by forming the cold foil about the tube surface immediately after extrusion of the tube while the tube is still at an elevated temperature and thereafter allowing the tube to shrink thereby forming pockets between adjacent bonds securing the barrier layer to the outer surface of the tube. The size of the pocket can be controlled by intermediate short axial bonds between adjacent circumferential bonds. This has the advantage that a slight insulation effect may be achieved between the pipe and the foil layer.

An advantage of the invention is that the bond employed between the barrier layer and the tube itself may be of an ageable type so that at the end of its useful life the bonding between pockets may have broken down sufficiently to allow the pipe to be withdrawn to leave the barrier layer jacket *in situ* so that a new pipe can be entered into the conduit now defined by said barrier layer.

In the apparatus of the present invention the bonding means may be capable of a reciprocating longitudinal motion and may be biased to a datum position so that on the application of heat and pressure to the tube the bonding means is secured with the tube for advancement therewith for a duration sufficient to effect bonding of the barrier layer to the tube itself and so that on release of the bonding means, the means returns to its datum position whereupon the cycle is repeated. In this way the tube may be subjected to a physical bond at spaced intervals along its length. The bonding means may comprise a pair of clamping heads each of which is contoured along the surface to accommodate and to contact the tube so that in the clamping position the clamp heads together define a plurality of circumferential pressure points adapted to be applied about a tube so that along a longitudinal length of the clamp heads *per se* a plurality of points of bonding are effected with intermediate spaces non-bonding therebetween.

The return of the clamp head to its datum position then leads a portion of the tube not bonded whereupon the process is repeated. Tube bonded in this way allows limited relative movement between foil and the tube surface to take account of the differential expansion between the tube and the foil. The advancing means for advancing the tube and the barrier layer in juxtaposition may comprise guide means for defining a path for longitudinal movement of the tube through the apparatus and supply means for the supply of longitudinal strip of barrier layer which is guided into juxtaposition into the tube for movement therewith. The tube and barrier layer may be passed through a forming shoe to shape the barrier layer about the tube. A sealing die may be provided whereby heat is provided to the overlapping longitudinal edges of a barrier layer to effect bonding of one edge to the other. In the practice of this invention it is preferred that the barrier layer contains a thin coating of a suitable adhesive, such for example, as polyethylene, polypropylene or hot melt as manufactured by Ciba Greigy or by the Henkel Chemical Company. The sealing may be effected by providing an electrically heated shoe in the top of a guide element adapted to bear upon the overlapping edges of the barrier layer to bond one edge to the other. The bonding means may include a carriage having an erect frame work carrying upper and lower die heads.

Each die head may be provided with electrical heating means and each die head may be movable in a vertical plane between a clamping position in which the die heads come together to apply clamping pressure to a tube disposed therebetween and in an open position in which the die heads are separated. Each die head may comprise a contoured semicylindrical die surface so that with the die heads in the clamping position, the semi-cylindrical die surfaces provided on each die together define a cylinder the general shape of a tube. Each surface has a plurality of longitudinally spaced radially inwardly directed ribs contoured with the inner surface such that each rib is adapted to contact the barrier layer disposed about a tube when in the clamping position and to apply pressure thereagainst towards the tube wall during the bonding operation. The movement of the die head may be effected by means of a pneumatic cylinder. The pneumatic cylinder may be operated by means of micro-switches disposed at the extremity of the travel of the carriage. Thus, in a typical cycle of operations as the carriage assembly returns to a datum position a first micro switch is operated to provide air to the pneumatic cylinder to urge the die heads into a clamping position so that the inner surfaces of the inwardly directed ribs engage at the foil covered tube and serves to clamp the carriage to the tube *per se*. In this position, the carriage is locked for movement with the tube and the carriage advances with the tube until the carriage and/or support therefore abuts the second microswitch which release the pneumatic pressure to the cylinder thereby releasing the die heads from the clamping position and in consequence the carriage from the tube. This permits continued movement of the tube in a forward direction and permits return movement of the tube and its associated clamp head independantly of the tube to its datum position.

The heating of the jaws of the clamp may be effected by means of oil or electrical heating or a mixture of both. In a particular embodiment of the present invention, the heat of the tube itself immediately after extrusion may serve to effect the bonding operation. The apparatus may produce a plurality of longitudinally spaced bonding areas between the foil and the tube each bonding area comprising a plurality of circumferential bonds extending wholly about the tube.

Following is a description by way of example only and with reference to the accompanying drawings of methods of carrying the invention into effect:—

IN THE DRAWINGS:—

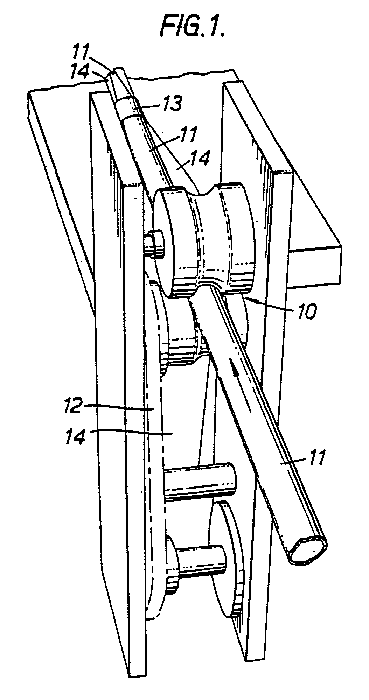

Figure 1 is a perspective view of a prototype of the apparatus in accordance with the present invention.

Figure 2 is a perspective view of the clamping assembly and its associated carriage with the clamping jaws in the open position.

Figure 3 is a view of Figure 2, with the jaws in the closed position.

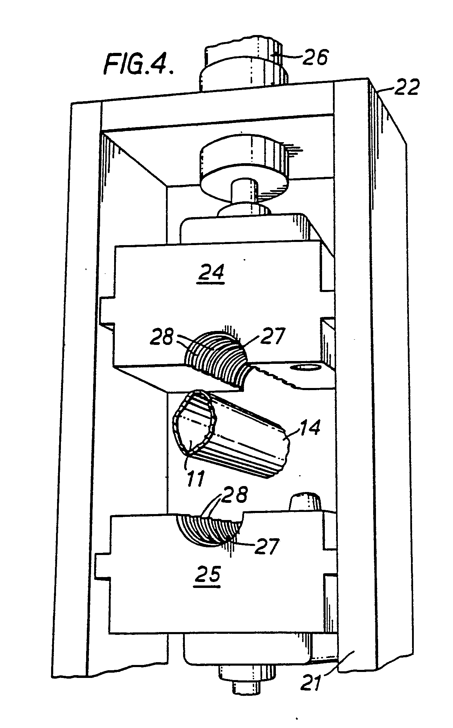

Figure 4 is a close-up of Figure 2 showing a detail of the jaws.

Figure 5 is a view of a biasing means for the carriage.

Figure 6 shows the foil edge sealing means.

Figure 7 shows the foil former.

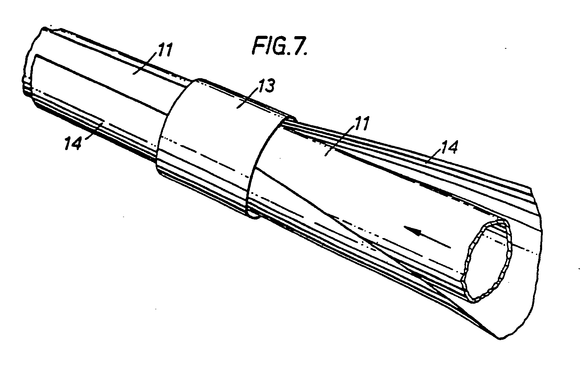

The apparatus comprises a pair of tube feed rollers 10 contoured to receive tube 11 and driven by means of chain 12 which is connected with motor means (not shown). A roll of aluminium foil provided with a coating on at least one surface thereof of polyethylene and of a width sufficient to be wrapped about tube 11 is carried in a roll on the lower part of the apparatus. The strip is fed upwardly and about a horizontally disposed roller in the vicinity of the tube feed rollers 10 and is fed forward with the tube to enter a tube former 13 (see Figure 7) which comprises a shaped component of generally cylindrical form which serves to guide and bend the foil 14 about the tube.

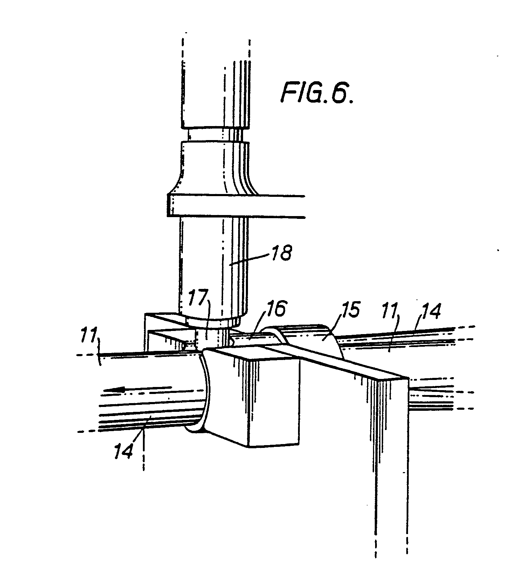

Turning now to Figure 6, the tube with the loosely wrapped foil thereabout is then fed to a cylindrical guide 15 to complete the formation of the foil about the tube with the longitudinal edges thereof overlapping one with respect to the other. A guide 15 is at the leading edge of a shoe assembly 16 having at least a heated contact element 17 extending therethrough so the inner extremity of it engages with the overlapping foil edges. The contact element 17 is heated by means of oil and electric heaters at 18 to apply heat and limited pressure to the longitudinal seam of the foil and to effect bonding between the edges so that as the tube leaves the shoe 16 the longitudinal edges on the upper surface thereof are bonded one with respect to the other.

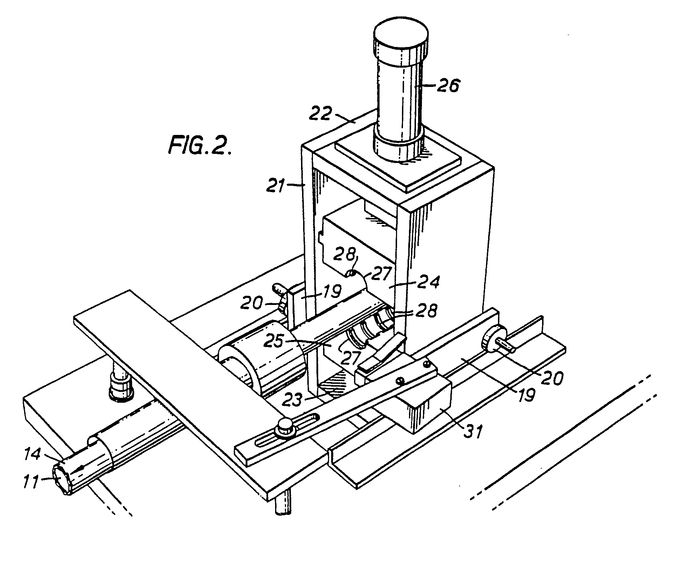

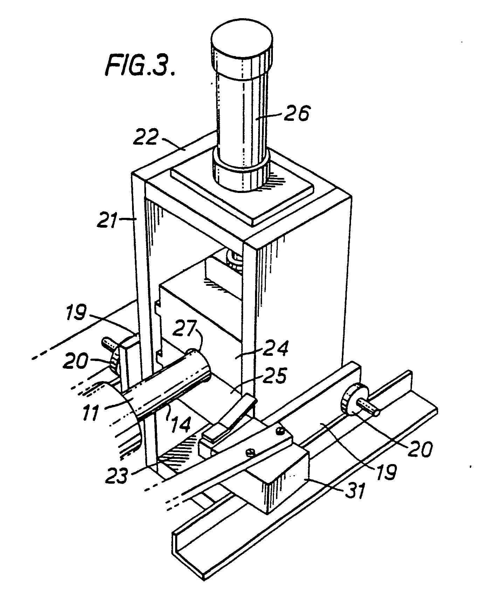

The means for the application of heat and pressure illustrated generally in Figure 2 comprises a chassis 19 having two pairs of wheels 20 on which the carriage rides, and erect support 21 having a top plate 22 and a base plate 23 which together support upper jaw 24 and lower jaw 25 of a pressure clamp assembly. The jaws 24 and 25 are capable of vertical reciprocating motion between an open position as shown in Figure 2 and a closed position as shown in Figure 3. Operation of the jaw assembly is effected by means of pneumatic cylinder 26 capable of exerting a clamping pressure of approximately 2 atmospheres in the clamped position. Each of jaws 24 and 25 are provided a semi-circular tube accommodating recess 27 said recess having on its surface a plurality of radially disposed ribs 28, in this embodiment 6 in number, spaced longitudinally of the tube accommodating recess 27, the inner surface of each rib being adapted to engage with and clamp the foiled clad outer surface of the tube and to apply pressure to the foil to bring it into bonding relationship with the body of the plastics material of the tube *per se* thereby effecting a bond between the tube body and the foil.

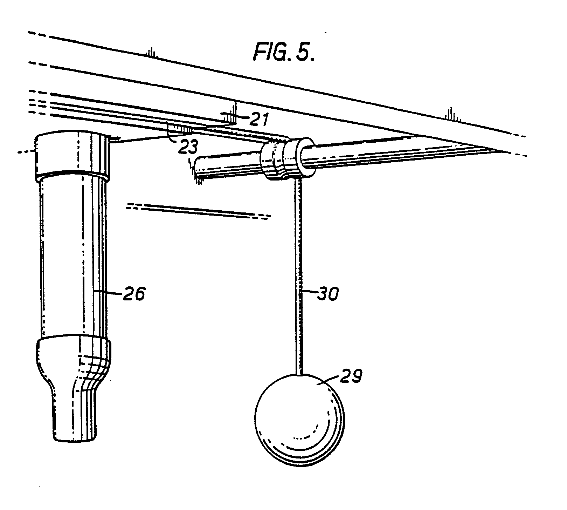

Figure 5 illustrates the biasing means comprising weights 29 connected by means of string 30 to the carriage to effect bias of the carriage to the datum position shown in Figure 2. A microswitch 31 limits forward travel of the carriage and a further microswitch (not shown) limits the rearward movement of the carriage. Electrical heating means are provided for the jaws 24, 25.

In operation, the motor serves to drive rollers 10 and advance tube 11 between the nip of the rollers towards former 13. At the same time the foil is fed at the same rate of advance as tube 11 into former 13 and is wrapped partially about the tube as shown in Figure 7. The partially wrapped tube is then fed through a guide 15 which completes the wrapping of the foil complete with overlap of the longitudinal edges thereof and shoe 16 and heated contact 17 effect the longitudinal seal as the tube and foil pass therethrough. With carriage chassis 19 in its rearward position, operation of the rearward micro switch (not shown) causes the jaws 24 and 25 to be urged together under the influence of air pressure supplied in pneumatic cylinder 26 to effect a clamping by jaws 24 and 25 of the foil layer about the tube. The said clamping action causes the carriage supported by chassis 19 to advance forwardly on wheels 20 with the advancing tube. Heating of the jaws 24 with pressure applied by pneumatic cylinder 26 to serve to effect bonding between the foil and the tube wall and the heating and application of pressure continue until the carriage triggers forward microswitch 31 which serves to release the air pressure from pneumatic cylinder 26 thereby releasing jaws 24 and 25 from the tube and allowing the carriage and associated wheeled chassis to move rearwardly under the influence of weight 29 connected by means of string 30 to the carriage to return the carriage assembly to its datum position. On reaching the datum position the chassis contacts the rearward microswitch (not shown) to recommence the cycle once again thereby effecting a further bonded area to the tube.

A 20 millimetre internal diameter cross-linked polyethylenic tube is provided with a barrier layer of aluminium foil 25 microns thick provided on its internal surface with a coating of hot melt obtained from Henkel Chemical Company. This hot melt applied as a uniform coating substantially 0.05 mm in thickness. The strip of aluminium was further coated on its external surface with a layer of polyester to provide an external protective coating. The foil was then applied to a polyethylenic tube using the apparatus described above to provide a longitudinally extending sleeve about the outer surface of the tube with a hot melt coated surface of the foil juxtaposed therewith. The temperature of the jaws 24, 25 was of the order of 100° to 120°C and the pneumatic cylinder 26 was arranged to provide a clamping pressure of approximately 2 atmospheres. The tube so produced was subjected to continuous heating and cooling of a closed heating system. The level of oxygen diffusion through the tube was not measurable after 1000 variations between hot and cold and foil sleeve maintained its integrity about the tube. Furthermore, there was no sign of surface cracking.

EXAMPLE

20mm cross-linked polyethylenic tube was provided with a barrier layer of aluminium foil. The aluminium foil employed was 25 micron thick was provided on its internal surface with a coating of "hot melt" obtained from Ciba Geigy. This "hot melt" was applied as a uniform coating substantially 0.05mm in thickness. The strip of aluminium was further coated on its external surface with a layer of polyester to provide an external protective coating. The foil was then wrapped around the cross-linked polyethylenic tube to provide a longitudinal extending sleeve extending about the outer surface of the tube with the "hot melt" coated surfaces of the foil in juxtaposition therewith. A heated shoe is applied over the overlap portion the temperature of the shoe being of the order of 100° to 120°C at a pressure of approximately 2 atmospheres, the arrangement being such as to produce bonding between the adjacent surface of the aluminium foil thereby providing a sealed foil sleeve about cross-linked polyolethylenic tube, the joint extending substantially longitudinally thereof.

The longitudinal spaced circumferential bonds are then provided by the application of a heat and pressure clamp about the tube whereby a clamping surface is heated to a temperature greater than 120°C and is applied at a pressure between two or three atmospheres circumferentially of the tube to cause or allow bonding of the foil to the tube in that circumferential position, the spacing being approximately 10 mm between adjacent circumferential bonds.

The tube was then connected as part of a closed heating system, was subject to a continuous heating and cooling operation. The level of oxygen diffusion through the tube was not measurable and after 1000 variations between hot and cold the foil sleeve retained its integrity about the tube and there was no sign of surface cracking or otherwise.

Furthermore an ageing test was conducted whereby the cross-linked polyolethylenic tube containing ageing agents such as Irganox (Registered Trade Mark) 1010 in an amount of 0.5% by weight together with the identical tube but having the barrier applied as described above, was placed in an oven maintained in a temperature of 150°C for a period of 5 days. On removal from the oven, the plain tube was badly discoloured, slightly deformed, and had not aged well, but the tube according to the present invention had retained its integrity; on stripping the foil from the tube, the tube was not discoloured in any way and did not appear to have suffered significant ageing. In consequence the construction of the invention would appear to provide improved ageing properties of the tube itself.

## Claims

1. A conduit comprising a tube of plastics material and an oxygen diffusion resistant barrier layer surrounding the tube characterised in that the barrier layer is bonded to the plastics material at longitudinally spaced intervals along the tube.

2. A conduit as claimed in claim 1 characterised in that the barrier layer is a metal foil layer and in that each of said bonds is a circumferential bond, such bonding of the foil allowing differential expansion and contraction between the tube and the barrier layer between the bonds.

3. A conduit as claimed in claim 2 characterised in that the barrier layer is provided on at least its inner surface with a layer of a heat sensitive adhesive compatible with the plastics material of said tube.

4. A conduit as claimed in any preceding claim wherein the barrier layer is applied loosely to the tube whereby a plurality of spaced annular cavities are formed between adjacent bonds.

5. A method of manufacuring a conduit as claimed in any preceding claim which method comprises advancing said tube of plastics material and said barrier layer in juxtaposition while forming said barrier layer about said tube, sealing overlapping edges of said barrier layer one to another to enclose said tube, and bonding said barrier layer to said tube at spaced intervals along said tube by the application of heat and pressure.

6. A method as claimed in claim 5 wherein the barrier layer is a foil having on at least the innerside thereof a heat sensitive adhesive coating and wherein the longitudinal edges of the tube are wrapped about and sealed one to the other.

7. A method as claimed in claim 6 where the plastic material of the tube is a polyolefin and wherein the heat sensitive coating is selected from polyethylene, polypropylene, either alone or in admixture with up to 10% by weight of an ethylenically unsaturated carboxylic acid.

8. A method as claimed in any one of claims 5 to 7 wherein the barrier layer is applied cold to a hot tube.

9. Apparatus for the production of a conduit by the method claimed in claim 5 which apparatus comprises delivery means for advancing a tube of plastics material and a barrier layer therefor in juxtaposition, forming means for forming said barrier layer about said tube, sealing means for sealing overlapping edges of said barrier layer one to another to enclose said tube, and bonding means for circumferentially bonding said barrier layer to said tube at spaced intervals along said tube by the application of heat and pressure.

10. Apparatus as claimed in claim 9 wherein the bonding means is capable of moving with said tube during the application of heat and pressure.

11. Apparatus as claimed in claim 9 or claim 10 wherein the bonding means is capable of a reciprocating longitudinal motion and is biased to a datum position, so that on the application of heat and pressure to the tube, the bonding means is secured with the tube for advance therewith for the duration sufficient to effect bonding of the barrier layer to the tube itself and on release of the heat and pressure, the bonding means returns to its datum position whereupon the cycle is repeated.

12. Apparatus as claimed in any one of claims 9 to 11 wherein the delivery means comprises guide means for defining a path for longitudinal movement of the tube through the apparatus and supply means for the supply of a longitudinal strip of barrier layer which is guided into juxtaposition into the tube for movement therewith.

13. Apparatus as claimed in any one of claims 9 to 12 wherein the forming means comprises a forming shoe to shape the barrier layer about the tube and the sealing means comprises a sealing die whereby heat is provided to the longitudinal edges of the barrier layer to effect bonding of one edge to the other.

**Patentansprüche**

1. Leitung enthaltend ein Rohr aus Kunststoff und eine das Rohr umgebende sauerstoffdiffusionshemmende Sperr-schicht, dadurch gekennzeichnet, daß die Sperrschicht mit dem Kunstoff in in Längsabständen angeordneten Bereichen verklebt ist.

2. Leitung nach Anspruch 1, dadurch gekennzeichnet, daß die Sperrschicht eine Metallfolienschicht ist und daß jede der Verklebungen eine Umfangsverklebung ist, wobei eine solche Verklebung der Folie unterschiedliche Ausdehnung und Zusammenziehung des Rohres und der Sperrschicht zwischen den Verklebungen gestattet.

3. Leitung nach Anspruch 2, dadurch gekennzeichnet, daß die Sperrschicht wenigstens an ihrer inneren Oberfläche mit einer Schicht aus einem mit dem Kunstoffmaterial des Rohres verträglichen, wärmeempfindlichen Kleber versehen ist.

4. Leitung nach einem der vorhergehenden Ansprüche, bei welcher die Sperrschicht lose auf das Rohr aufgebracht ist, wodurch zwischen den benachbarten Verklebungen eine Mehrzahl von im Abstand voneinander angeordneten, ringförmigen Hohlräumen gebildet werden.

5. Verfahren zur Herstellung einer Leitung nach einer der vorhergehenden Ansprüche, welches Verfahren darin besteht, daß bei der Bildung der besagten Sperrschicht um das Rohr das Rohr aus Kunststoff und die Sperrschicht nebeneinander vorbewegt werden, während die Sperrschicht um das Rohr gebildet wird, überlappende Ränder der Sperrschicht abdichtend miteinander verbunden werden, so daß das Rohr umschlossen wird, und die Sperrschicht in in Abständen angeordneten Bereichen längs des Rohres durch Anwendung von Wärme und Druck an das Rohr angeklebt wird.

6. Verfahren nach Anspruch 5, bei welchem die Sperrschicht eine Folie ist, die wenigstens an ihrer Innenseite eine wärmeempfindliche Beschichtung aufweist, und bei welcher die Längsränder des Rohres übereinandergeschlagen und miteinander abdichtend verbunden sind.

7. Verfahren nach Anspruch 6, bei welchem der Kunststoff des Rohres ein Polyolefin ist und bei welchem die wärmeempfindliche Beschichtung gewählt ist aus Polyethylen Polypropylen, entweder allein oder unter Zusatz von bis zu 10 Gewichtsprozenten von ungesättigter Karbonsäure mit C = C—Doppelbindung.

8. Verfahren nach einem der Ansprüche 5 bis 7, bei welchem die Sperrschicht kalt auf ein heißes Rohr aufgebracht wird.

9. Gerät zur Herstellung einer Leitung durch das Verfahren nach Anspruch 5, welches Gerät.

Beschickungsmittel zum Vorbewegen eines Rohres aus Kunststoff une einer Sperrschicht dafür in Nebeneinanderanordnung enthält sowie

Formmittel zum Formen der Sperrchicht um das besagte Rohr,

Dichmittel zum abdichtenden Verbinden überlappender Ränder der Sperrschicht, so daß das Rohr umschlossen wird, und

Verklebemittel zum Ankleben der Sperrschicht an dem Rohr in im Abstand voneinander längs des Rohres angeordneten Bereichen durch Anwendung von Wärme und Druck.

10. Gerät nach Anspruch 9, bei welcher die Verklebemittel während der Anwendung von Wärme und Druck mit dem Rohr bewegbar sind.

11. Gerät nach Anspruch 9 oder 10, bei welcher die Verklebemittle hin- und hergehend längsbewegbar und auf eine Ausgangslage hin vorbelastet sind, so daß bei Anwendung von Wärme und Druck auf das Rohr die Verklebemittel an dem Rohr befestigt sind zur Vorbewegung mit diesem für die Zeitdauer, die ausreicht ein Ankleben der Sperrschicht an em Rohr selbst zu bewirken, und nach Entlasten von der Wärme und dem Druck die Verklebemittel in ihre Ausgangslage zurückkehren, worauf der Zyklus wiederholt wird.

12. Gerät nach einem der Ansprüche 9 bis 11, bei welchem die Beschickungsmittel Führungsmittel enthalten zur Bestimmung einer Bahn für die Längsbewegung des Rohres durch das Gerät und Zufuhrmittel zum Zuführen eines längsverlaufenden Streifens von Sperrschicht, welcher in Nebeneinanderanordnung zu dem Rohr zur Bewegung mit demselben geführt ist.

13. Gerät nach einem de Ansprüche 9 bis 12, dadurch gekennzeichnet, daß die Formmittel einen Formschuh enthalten, durch den die Sperrchicht um das Rohr formbar ist, und die Dichmittel einen Abdichtstempel enthalten, durch welchen die Verklebung eines Randes mit dem anderen bewirkbar its.

**Revendications**

1. Tuyau comprenant un tube en matière plastique et un couche d'arrêt résistant à la diffusion d'oxygène entourant le tube, caractérisé en ce que la couche d'arrêt est unie à la matière plastique à intervalles longitudinalement espacés du tube.

2. Tuyau suivant la revendication 1, caractérisé en ce que la couche d'arrêt est une couche faite d'une feuille de métal mince et chacune des jonctions est une jonction circonférentielle, cette jonction de la feuille mince permettant une dilatation et une contraction différentielles le tube et la couche d'arrêt entre les jonctions collées.

3. Tuyau suivant la revendication 2, caractérisé en ce que la couche d'arrêt est pourvue sur au moins sa surface interne d'une couche d'un adhésif sensible à la chaleur compatible avec la matière plastique du tube.

4. Tuyau suivant l'une quelconque des revendications précédentes, dans lequel la couche d'arrêt est appliquée sans serrage sur le tube de sorte que plusieurs cavités annulaires espacées sont formées entre des jonctions voisines.

5. Procédé pour fabriquer un tuyau suivant l'une quelconque des revendications précédentes, selon lequel on fait avancer le tube en matière plastique et la couche d'arrêt en juxtaposition tout en conformant la couche d'arrêt autour du tube, on soude les bords chevauchants de la couche d'arrêt l'un à l'autre pour enfermer le tube,

et on joint la couche d'arrêt au tube à intervalles espacés le long de ce tube par un apport de chaleur et de pression.

6. Procédé suivant la revendication 5, dans lequel la couche d'arrêt est une feuille·mince comportant sur au moins sa surface interne un couche d'adhésif sensible à la chaleur et les bords longitudinaux de la feuille mince enveloppent le tube et sont soudés l'un à l'autre.

7. Procédé suivant la revendication 6, dans lequel la matière plastique du tube est une polyoléfine et le revêtement sensible à la chaleur est choisi parmi le polyéthylène, le polypropylène, soit seul, soit en mélange avec jusqu'à 10% en poids d'un acide carboxylique à non saturation èthylénique.

8. Procédé suivant l'une quelconque des revendications 5 à 7, dans lequel la couche d'arrêt est appliquée à froid sur un tube chaud.

9. Appareil pour la production d'un tuyau par le procédé suivant la revendication 5 qui comprend

un dispositif de distribution pour faire avancer un tube en matière plastique et une couche d'arrêt pour ce tube en juxtaposition,

un dispositif façonneur pour conformer la couche d'arrêt autour du tube,

un dispositif de soudage pour souder les bords chevauchants de la couche d'arrêt l'un à l'autre en vue d'enfermer le tube, et

un dispositif de jonction pour unir circonférentiellement la couche d'arrêt au tube à intervalles espacés le long du tube par un apport de chaleur et de pression.

10. Appareil suivant la revendication 9, dans lequel le dispositif de jonction est à même de se déplacer avec le tube pendant l'apport de chaleur et de pression.

11. Appareil suivant la revendication 9 ou 10, dans lequel le dispositif de jonction est à même de se déplacer en un mouvement longitudinal de va-et-vient et est rappelé vers une position de référence, de sorte que lors d'un apport de chaleur et de pression au tube, la dispositif de jonction est fixé au tube pour l'accompagner dans son avancement, pendant le laps de temps suffisant pour faire adhérer la couche d'arrêt au tube lui-même et que lorsque la chaleur et la pression sont supprimées, le dispositif de jonction revient à sa position de référence après quoi le cycle se répète.

12. Appareil suivant l'une quelconque des revendications 9 à 11, dans lequel le dispositif de distribution comprend des moyens de guidage pour délimiter un trajet pour le déplacement longitudinal du tube à travers l'appareil et un dispositif d'alimentation pour débiter une bande longitudinale formant la couche d'arrêt quie est gudiée en juxtaposition avec le tube de manière à l'accompagner.

13. Appareil suivant l'une quelconque des revendications 9 à 12, dans lequel le dispositif façonneur comprend un sabot façonneur destiné à conformer la couche d'arrêt autour du tube et la dispositif de soudage comprend une filière à souder au moyen de laquelle de la chaleur est appliquée aux bords longitudinaux de la couche d'arrêt pour joindre un board de cette couche à l'autre.

## FIG.1.

FIG.2.

FIG.3.

FIG.4.

FIG.5.

FIG.6.

FIG.7.